# EUROPEAN PATENT APPLICATION

(11) **EP 4 480 678 A1**
(43) Date of publication of application: **25.12.2024**
(21) Application number: 24165471.4
(22) Date of filing: 19.06.2023
(51) Int. Cl.: B29C 65/00, B29C 65/50, B32B 7/06, B32B 27/12, B32B 43/00, C09J 5/06, C09J 7/21, C09J 7/35, C09J 7/29, B32B 5/02, B32B 7/12, B32B 27/18, B32B 27/28, B32B 27/30, B32B 27/32, B32B 27/36

(54) **SUPPORTED HEAT INITIATED DEBONDABLE LAYER FOR POWER BATTERY APPLICATIONS**

(62) Divisional of application: 23179911.5
(71) Applicant: 3M Innovative Properties Co., St. Paul, MN 55133-3427 (US)
(72) Inventor: Szillat, Florian, 41453 Neuss (DE); Rohmann, Anja, 41453 Neuss (DE); Pagliuca, Antonio, Bracknell, RG12 8HT (GB); Preedy, Graham Ward, Bracknell (GB); Zhao, Ze Pu, Shanghai, 200233 (CN); Zhan, Yun Shu, Shanghai, 200233 (CN)
(74) Representative: Mathys & Squire

(57) **Abstract**

The present disclosure provides a heat-initiated debondable attachment article, comprising
(i) a first debondable layer having a first major surface and a second major surface and comprising at least one first thermoplastic polymer;
(ii) a second debondable layer having a first major surface and a second major surface and comprising at least one second thermoplastic polymer;
(iii) a porous support layer between the first surface of the first debondable layer and the first surface of the second debondable layer;
(iv) optionally, a first adhesive layer covering the second major surface of the first debondable layer;
(v) optionally, a second adhesive layer covering the second major surface of the second debondable layer;
(vi) optionally, a first liner atop the outer surface of the first adhesive layer or the first debondable layer; and
(vii) optionally, a second liner atop the outer surface of the second adhesive layer or the second debondable layer.

## Description

### Technical Field

The disclosure relates to a heat-debondable attachment article. Further, the present disclosure further relates to a die-cut and a part assembly comprising the heat-debondable attachment article. The present disclosure also relates to a method for bonding and debonding an assembly. Moreover, the present disclosure further relates to a use of the heat-debondable article in the manufacture of recyclable articles, in particular of vehicle parts or battery parts.

### Background

Adhesives have been used in many structural applications. Such structural applications have included vehicles assembly like automobile and aircraft assembly. For example, epoxy-based adhesives are well stablished in those applications. This also applies in increasing extent in the manufacture of the presently quick-growing technical field of manufacturing batteries for the mobile electrification such as the automotive electrification. As common with these adhesive, very strong bonds between substrates, i.e. permanent bonds are generally desired and achieved.

However, it may become desirable in numerous applications to release the bond between different parts in devices or in certain assemblies. This is in particular true when there is a desire to dissemble said parts or assemblies for in order to recycle at least parts thereof.

Therefore, there exist an increasing desire in the art for adhesive or bonding technologies which provide not only good bonds between parts, but also enable the debonding of parts at a point when desired.

### Summary

The present disclosure provides a heat-initiated debondable attachment article, comprising
(i) a first debondable layer having a first major surface and a second major surface and comprising at least one first thermoplastic polymer;
(ii) a second debondable layer having a first major surface and a second major surface and comprising at least one second thermoplastic polymer;
(iii) a porous support layer between the first surface of the first debondable layer and the first surface of the second debondable layer;
(iv) optionally, a first adhesive layer covering the second major surface of the first debondable layer;
(v) optionally, a second adhesive layer covering the second major surface of the second debondable layer;
(vi) optionally, a first liner atop the outer surface of the first adhesive layer or the first debondable layer; and
(vii) optionally, a second liner atop the outer surface of the second adhesive layer or the second debondable layer.

In a preferred embodiment, the first debondable layer and the second debondable layer are in contact with each other through the porous support layer.

The present disclosure further provides a die-cut, comprising the heat-debondable attachment article.

Also, the present disclosure relates to a method for bonding and debonding a part assembly, the method comprising the following steps:
(I) Attaching an article as described herein onto at least part of the surface of a first part;
(II) Optionally, applying at least one adhesive onto a first major surface of a second part;
(III) Attaching the second part onto the article attached to the first part such that the article connects the first and second part, thereby forming a part assembly;
(IV) Optionally, allowing the at least one adhesive to cure;
(V) Heating the part assembly so as to soften and/or at least partially melt the thermoplastic resin comprised in the first debondable layer and/or second debondable layer;
(VI) Disconnecting the second part from the first part.

Furthermore, the present disclosure relates to a use of the heat-debondable article in the manufacture of recyclable articles, in particular of vehicle parts or battery parts.

### Brief Description of the Figures

**Figure 1** shows a representative a heat-initiated debondable attachment article according to the present disclosure.
**Figure 2** shows a comparative process to produce a heat-initiated debondable attachment article.
**Figure 3** shows a first process to produce a heat-initiated debondable attachment article according to this disclosure.
**Figure 4** shows a second process to produce a heat-initiated debondable attachment article according to this disclosure.

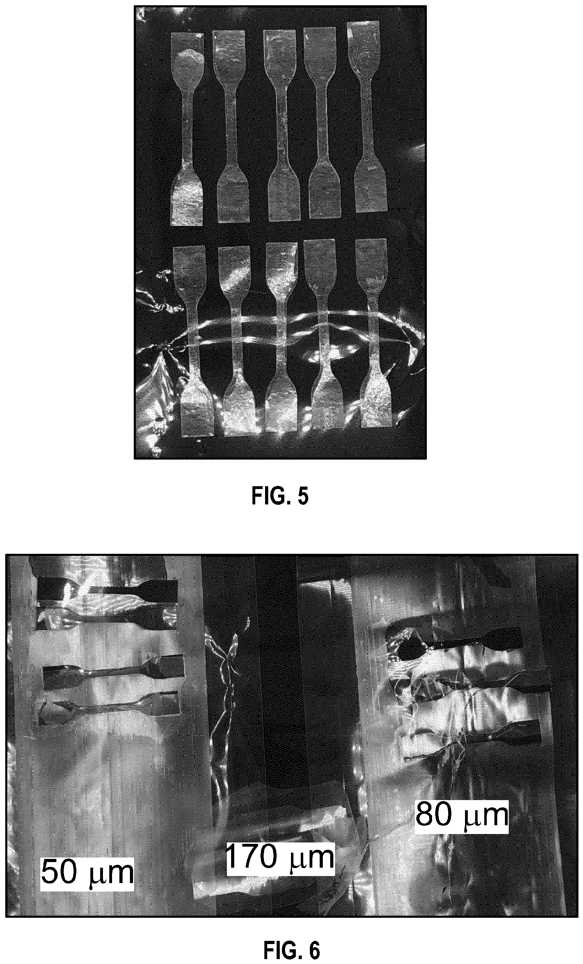

**Figure 5** shows a picture of a die-cut manufacturing according to this disclosure.
**Figure 6** shows a picture of a die-cut manufacturing according to a comparative process.
**Figure 7** shows a schematic description of a test specimen using the supported functional layer.
**Figure 8** shows a picture of a test specimen using a supported functional layer.
**Figure 9** shows a picture of a test specimen clamped into a test machine.
**Figure 10** shows a schematic drawing of a perforated supported functional layer.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of", but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The first aspect of the present disclosure is a heat-initiated debondable attachment article, comprising
(i) a first debondable layer having a first major surface and a second major surface and comprising at least one first thermoplastic polymer;
(ii) a second debondable layer having a first major surface and a second major surface and comprising at least one second thermoplastic polymer;
(iii) a porous support layer between the first surface of the first debondable layer and the first surface of the second debondable layer;
(iv) optionally, a first adhesive layer covering the second major surface of the first debondable layer;
(v) optionally, a second adhesive layer covering the second major surface of the second debondable layer;
(vi) optionally, a first liner atop the outer surface of the first adhesive layer or the first debondable layer; and
(vii) optionally, a second liner atop the outer surface of the second adhesive layer or the second debondable layer.

This article may be attached to surfaces by means of pressure and/or heat, thereby providing ample adhesive bonds between surfaces, i.e. different parts or articles. However, upon application of heat, the at least one thermoplastic polymer in the at least one first debondable layer and/or the at least one second debondable layer may be caused to at least partially melt. This has the effect of weaken the bond sufficiently to be released, usually with the application of certain physical means such as wedges or simply moving the parts in different directions. By this means, a reliable bonding and debonding of parts and articles has surprisingly been achieved. Moreover, the heat-initiated debondable article according to the present disclosure comprises a porous support layer between the first surface of the first debondable layer the first surface of the second debondable layer. The use of this support structure facilitates the manufacture of die-cuts, which is particularly desirable for a great variety of applications, the transportability of the article, as well as of ease of application of the article. In addition, the article may easily be attached onto a surface of a first substrate such as by means of heat and/or pressure. Then, this assembly may be further processed, stored and/or shipped, until a second substrate is attached to the assembly, e.g. by means of an adhesive. This is highly advantageous in a number of applications in industrial manufacturing processes.

In this regard, it is preferred that the porous support layer comprises at least one material selected from tissue, mesh, non-woven cloth, vlies, woven cloth, scrim, and any combinations thereof, preferably non-woven cloth, mesh, vlies, and any combinations thereof. Preferably, the porous support layer comprises at least one material selected from natural and synthetic fibers, preferably from synthetic fibers, more preferably from polyethylene fibers. Also, it is advantageous when the porous support layer exhibits an area weight in the range of from 1 to 30 g/square meter, preferably from 2 to 25 g/square meter, and more preferably from 3 to 20 g/square meter. Preferably, the porous support layer exhibits a thickness in the range of from 20 to 200 micrometers, preferably from 40 to 180 micrometers, and more preferably from 50 to 120 micrometers. In a preferred exemplary embodiment of the present disclosure, the porous support layer is a mesh.

The at least one thermoplastic polymer in the at least one first and/or second debondable layer preferably polymer exhibits a glass transition temperature in the range of from 20 to 100 °C, preferably from 25 to 80 °C, and more preferably from 35 to 75 °C. This has the effect that the thermoplastic polymer at least partially melts upon application of heat, and therefore the article loses at least some of its stability, i.e. its bonding properties. This enables the desirable debonding as described herein. The at least one thermoplastic polymer is advantageously selected from polyesters, poly(meth)acrylates, acrylonitrile butadiene styrenes, polyamides, polybenzimidazoles, polycarbonates, polyether sulfones, polyoxymethylenes, polyether ether ketones, polyetherimides, polyethylenes, polyphenylene oxides, polyphenylene sulfides, polypropylenes, polystyrenes, polyvinyl chlorides, and any combinations thereof, preferably polyesters. In this regard, it is preferred that the at least one thermoplastic resin exhibits a number average molecular weight determined by means of GPC in the range of from 5,000 to 50,000 g/mol, preferably from 7,000 to 40,000 g/mol, and more preferably from 8,000 to 30,000 g/mol.

It is further preferred that the at least one first debondable layer and/or the at least one second debondable layer comprises at least one toughener. This has the effect of improved adhesive performance such as improved overlap shear strength and/or tensile strength at room temperature without compromising the performance at the maximum service temperature. Furthermore, this will have the effect of a reduced brittleness of the first and/or second debondable layer. Preferably, the at least one toughener is selected from butadiene rubbers, nitrile rubbers, and core-shell rubbers, more preferably from core-shell rubbers. Exemplary compounds which may be advantageously used as butadiene rubbers or nitrile rubbers are carboxyl-, amine-, epoxy-, hydroxyl- or methacrylate-terminated butadiene, butadiene styrene or butadiene acrylonitrile copolymers, preferably amine terminated butadiene styrene or butadiene acrylonitrile copolymers. Such tougheners are commercially available, for example, under the trade designations Hypro CTBN, ATBN, ETBN, HTB or VTBNX from CVC Thermoset Specialities and Hycar ATBN from Amerald Materials, or of the MX Series from Kaneka such as MX 257.

With regard to the core-shell rubber as toughener, any core-shell rubber toughener commonly known in the art may be used in the context of the present disclosure. In a typical embodiment, the core-shell rubber toughener is a composite material configured by materials where the core portion on the inside and the shell portion on the outside are mutually different. Herein, the term "different materials" refers to materials where the composition and/or properties are mutually different, and therefore includes materials where the same type of resins are used but the molecular weights are mutually different, and the like.

From the perspective of favourably achieving a toughening effect on the compositions as described herein, the Tg of the shell portion is preferably higher than the Tg of the core portion. In this case, while flexibility is provided to the cured epoxy adhesive because the core portion which has a relatively low Tg functions as a centralized point of stress, the shell portion suppresses unwanted agglomeration of the core-shell rubber, and thus the core-shell toughener can be uniformly dispersed in the compositions as described herein.

Examples of the core-shell rubber toughener include methyl methacrylate - butadiene copolymer, methyl methacrylate - butadiene - styrene copolymer, methyl methacrylate - acrylonitrile - butadiene - styrene copolymer, methyl methacrylate - acrylic rubber copolymer, methyl methacrylate - acrylic rubber - styrene copolymer, methyl methacrylate - acrylic butadiene rubber copolymer, methyl methacrylate - acrylic butadiene rubber - styrene copolymer, methyl methacrylate - (acrylic silicone IPN rubber) copolymer, and the like, but are not restricted thereto. Methyl methacrylate - butadiene copolymer, methyl methacrylate - butadiene - styrene copolymer, and methyl methacrylate - acrylic butadiene rubber - styrene copolymer can be advantageously used as the core-shell toughening agent.

The core-shell toughener is normally in the form of fine particles, and the average value (weight average particle diameter) of the primary particle diameter thereof is generally approximately 0.05 micrometers or higher or approximately 0.1 micrometers or higher to approximately 5 micrometers or lower or approximately 1 micrometer or lower.

Preferably, the core-shell rubber can be used in a state dispersed in a matrix. It is preferred that the matrix is an epoxy resin. A matrix with favourable affinity to either first or second epoxy resin as described herein is particularly preferable from the perspective of favourable dispersion of the core-shell rubber in the composition as described herein. Examples of the matrix can include epoxy resins (such as bisphenol A and the like).

The core-shell toughener can be a commercial product that is provided as a resin modifying agent or the like, and examples include BTA 751 (commercially available from Dow Chemical) as a methyl methacrylate-butadiene-styrene (MBS) type core-shell resin, MX-153 (commercially available from Kaneka) as a resin where methyl methacrylate-butadiene-styrene (MBS) dispersed in bisphenol A diglycidyl ether), and MC-257 (commercially available from Kaneka) as a butadiene core-shell resin, dispersed in epoxy, and F351 (commercially available from Aika Industries) as the acrylic core-shell resin, Paraloid 2650A (butadiene rubber), Hycar ATBN (CVC Chemicals, liquid butadiene rubber), and the like.

With regard to the effects brought about the presence of the at least one first toughener in the compositions as described herein, it is preferred that the at least one toughener is contained in the at least one first debondable layer in an amount in the range of from 1 to 25 wt.-%, preferably from 2.5 to 20 wt.-%, and more preferably from 5 to 15 wt.-%, based on the total weight of the at least one first debondable layer. Similarly, it is preferred that the at least one toughener is contained in the at least one second debondable layer in an amount in the range of from 1 to 25 wt.-%, preferably from 2.5 to 20 wt.-%, and more preferably from 5 to 15 wt.-%, based on the total weight of the at least one second debondable layer. Moreover, with regard to the effects described herein, it is preferred that the at least one first debondable layer exhibits a thickness in the range of from 1 to 300 micrometers, preferably from 3 to 250 micrometers, and more preferably from 5 to 200 micrometers. Similarly, it is preferred that the at least one second debondable layer exhibits a thickness in the range of from 1 to 300 micrometers, preferably from 3 to 250 micrometers, and more preferably from 5 to 200 micrometers.

The complete article may advantageously exhibit a total thickness in the range of from 40 to 500 micrometers, preferably from 70 to 450 micrometers, and more preferably from 90 to 400 micrometers. Alternatively, the complete article may advantageously exhibit a total thickness in the range of from 40 to 500 micrometers, preferably from 70 to 450 micrometers, and more preferably from 90 to 400 micrometers.

The heat-debondable attachment article according to the present disclosure may further comprise a first adhesive layer disposed on at least part of the second major surface of the first debondable layer. This may add to ease of application and/or enhancing the adhesive properties of the article. Similarly, the heat-debondable attachment article according to the present disclosure may further comprise a second adhesive layer covering the second major surface of the second debondable layer. Preferably, the first adhesive layer and/or the second adhesive layer comprises at least one adhesive selected from structural adhesives, semi-structural adhesives, and pressure sensitive adhesives, preferably pressure sensitive adhesives.

It is further preferred that the attachment article as described herein comprises perforations. In this regard, it is preferred that either or both first and second debondable layer comprise perforations. This may have the effect of effectively encapsulate the heat-initiated debondable layer, which enhances the bonding and debonding capabilities of the article as described herein. Alternatively, the perforations may extend through the complete thickness of the article from the first major surface to the second major surface. It is further preferred that at least a portion of the article comprises perforations. Thereby, adhesive bonding and debonding properties may be distributed as desired over the length or over certain areas of the article as described herein.

Preferably, the article provides an overlap shear strength at a temperature range between 20 to 65 °C in the range of from 5 to 10 MPa and less than 5 MPa, preferably less than 3 MPa, and more preferably less than 1.5 MPa at a temperature in the range of from 80 to 100 °C.

The present disclosure further provides die-cut, comprising the article as described herein. Die-cuts provide numerous advantages with regard to transportability, application, and very desirably the precise fit for various shapes and applications.

The present disclosure further provides s part assembly having a first end and a second end, comprising a first part, a second part, and the heat-initiated debondable attachment article as described herein between the first and the second part. The first and the second part may be selected from a great variety of shapes and materials. For instance, they may be selected from metal or composite panels as used in vehicle bodies or in aerospace interior or exterior parts. Also, in an advantageous embodiment of the present disclosure, they may be selected from battery casing parts, i.e. one of first and second parts may be a battery casing, and the other part may be a battery lid or the like. This contributes advantageously to the recyclability of a battery system. It is further preferred that the part assembly further comprises at least one adhesive disposed between the attachment article and the at least one first part and/or the at least one second part. The at least one adhesive is preferably selected from structural adhesives and semistructural adhesives, such as from two-components structural adhesives. Advantageously, the heat-initiated debondable attachment article bonds the first panel and second parts together. The part assembly may comprise the attachment article in the complete length between the first end and the second end. Alternatively, the attachment article may be disposed only close to the first end and/or close to the second end. This may bring the advantage that only in this position a first cleavage between first and second part may be achieved, which then compromises the bond between the first and second part on the complete length. Thus, an easy debonding may be achieved, with strong or even very strong bonds on the major length of the bond between first and second part where, for example, a strong structural adhesive may be employed. For example, the attachment article may be disposed at a length in the range of from 0.1 to 30 cm, preferably from 0.2 to 20, more preferably from 0.3 to 15 cm starting from the first end and/or from the second end of the part assembly.

Another aspect of the present disclosure is a method for bonding and debonding a part assembly, the method comprising the following steps:
(I) Attaching an article as described herein onto at least part of the surface of a first part;
(II) Optionally, applying at least one adhesive onto a first major surface of a second part;
(III) Attaching the second part onto the article attached to the first part such that the article connects the first and second part, thereby forming a part assembly;
(IV) Optionally, allowing the at least one adhesive to cure;
(V) Heating the part assembly so as to soften and/or at least partially melt the thermoplastic resin comprised in the first debondable layer and/or second debondable layer;
(VI) Disconnecting the second part from the first part.

Attaching in step (I) may comprise the application of pressure and/or heat. Pressure and/or heat is selected such that the at least one thermoplastic resin comprised in the at least one first heat debondable layer and the at least one second heat debondable layer is caused to at least partially soften and/or at least partially melt, thereby effectuating a certain bonding or lamination of the article to the part. Preferably, the material of the first part and/or the material of the second part is selected from metals, polymers, compound materials, carbon fiber materials, and ceramic materials. It is also preferred that the method as described herein is a method of manufacturing and recycling of automotive panel assemblies or battery assemblies.

Yet another aspect of the present disclosure is the use of the heat-initiated debondable article as described herein or the die-cut as described herein in the manufacture of recyclable articles. Preferably, the article is selected from panels, vehicle body parts, battery parts, interior parts, exterior parts. It is further preferred that the manufacture takes place in the automotive industry, the commercial transportation industry, the civil engineering industry, the aerospace industry, or the shipbuilding industry. It is particularly preferred that the recyclable article is a part of a battery, and the battery is part of a car, a truck, a train, an aircraft, a spacecraft, a watergoing vessel such as a ship or a boat, a tool, a household applicance or an electricity system or a photovoltaic system of a building.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### Overlap Shear Strength

Overlap Shear Strength was determined according to DIN EN 1465 (issued 2009). Testing details are described within the Example section.

### Tensile Strength

Tensile strength was determined according to the LWF-KS-2 method [Patent DE 195 22 247 A1].

### Cleavage Strength

Cleavage Strength was determined according to ASTM D1062 using an Instron 5500R tensile tester.

### Example 1 and Comparative Examples 1 & 2:

**Table 1: Used materials, their function and supplier.**

| **Material** | **Function, Description** | **Supplier** |
|---|---|---|
| Marnex AH441 | Co-Polyester, 12.000 g/mol | Macroocean |
| Marnex AH645 | Co-Polyester, 15.000 g/mol | Macroocean |
| DP 6330 | PUR based 2K Adhesive | 3M |
| Optiveil^{™}, fine polyester veil | Support Layer, 8 g/m² | Technical Fibre Products |

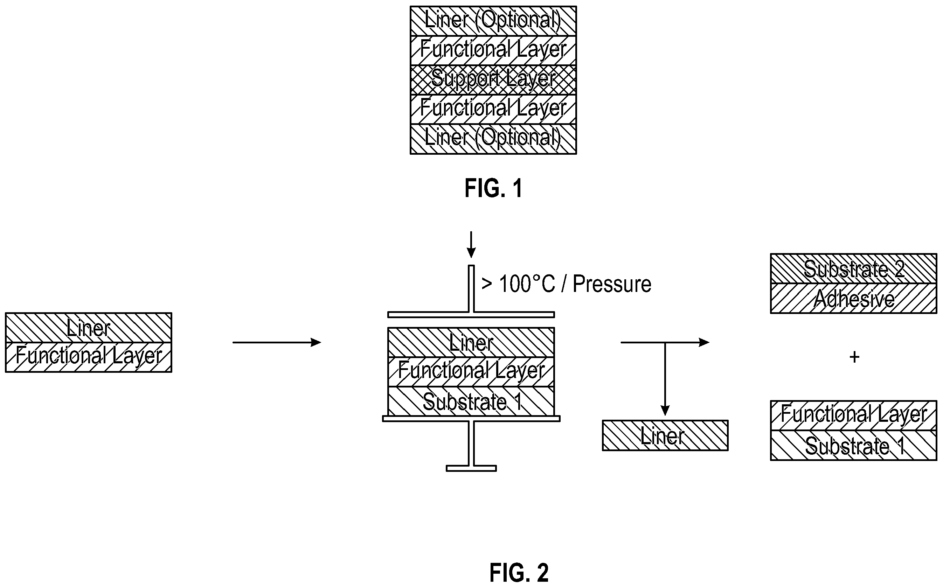

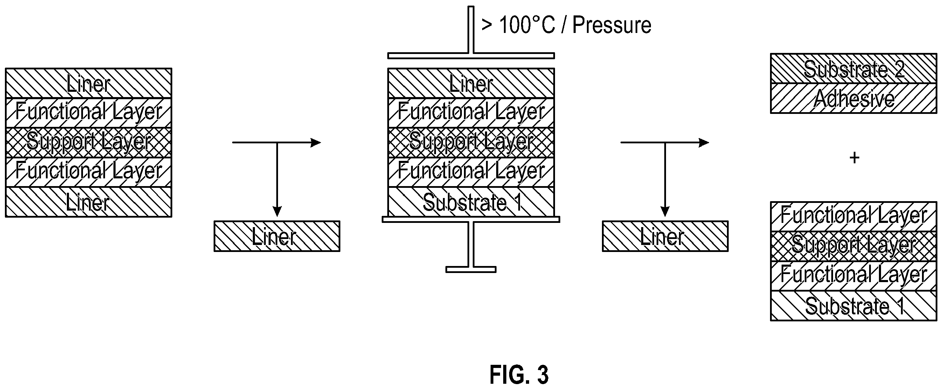

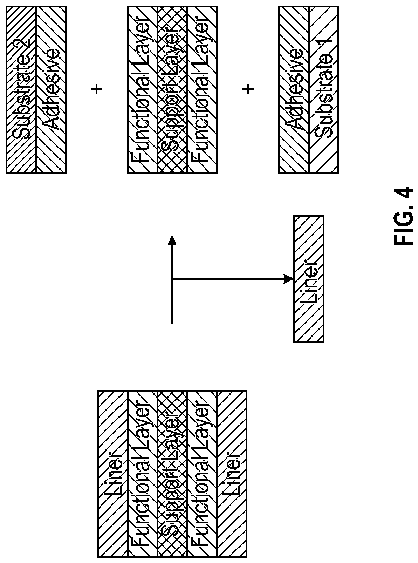

A HotMelt foil comprising a blend (50:50 wt%) of Marnex AH441 and Marnex AH645 was extruded on a siliconized PET liner. The thickness of the functional layer can be adjusted as desired between e.g. 10 - 200 µm. For the mechanical analysis (OLS) of the comparison example 1, a 50 µm thick functional layer was used, which was laminated to the given substrate by means of heat (105°C) and pressure for 5 minutes (process according to figure 2). For patent Example 1, two 50 µm thick functional layers (same as in comparison example 1) were used in combination with a support layer (Optiveil^{™}, fine polyester veil, 8 g/m²). The final functional layer was assembled by means of heat (105°C) and pressure for 5 minutes and was the starting material (supported functional layer) for the process shown in figures 3 and 4.

The OLS samples for Example 1 were assembled according to the process visualized in figure 4. As substrates pairs of e-coated Steel or AlClad 2024+PSA+BR127 were used. The gap size between the assembled substrates was 1.0 mm in all cases and was adjusted by means of PTFE spacers. PUR based DP6330 from 3M was used as adhesive in all cases. For the mechanical analysis (OLS) of the comparison example 2, DP6330 was used alone without any functional layer. To proof the ability to manufacture Die-Cuts a hydraulic press comprising a "dog-bone shaped" Die-Cut mold was used. The supported functional layer from example 1 was compared to the unsupported design (50, 80, 170 µm). 10 specimens were tried to be manufactured in all cases.

**Table 2: Result of Example 1 and Comparison Example 1 and 2. Failure modes: AF 4 Adhesive Failure; CF → Cohesive Failure; SCF → Mixed Failure Mode.**

| **Property / Method** | **Substrate** | **Example 1** *Figure 4**)* | **Comparison Example 1** *(**Figure 2**)* | **Comparison Example 2** |
|---|---|---|---|---|
| | | | | |
| Overlap Shear Strength (MPa) @ RT / Failure Mode | Ecoated Steel | 11.8 (1.1) / CF | 4.1 (0.6) / AF | 17.1 (0.1) / SCF |
| Overlap Shear Strength (MPa) @ 60°C / Failure Mode | | 5.0 (1.1) / CF | - | 6.8 (0.5) / SCF |
| Overlap Shear Strength (MPa) @ 90°C / Failure Mode | | 1.1 (0.4) | - | 5.0 (0.2) / SCF |
| | | | | |
| Overlap Shear Strength (MPa) @ RT / Failure Mode | AICIad2024 +PSA+BR1 27 | 10.5 (1.3) / CF | 4.6 (2.9) / AF | - |
| Overlap Shear Strength (MPa) @ 60°C / Failure Mode | | 6.1 (0.6) / CF | 3.5 (0.6) / AF+SCF | - |
| Overlap Shear Strength (MPa) @ 90°C / Failure Mode | | 1.0 (0.2) / CF | 0.2 (0.03) / CF | - |
| | | | | |
| Die-Cut specimens (see figure | | Yes (10 out of 10, see figure 5) | 50 µm → No | - |
| | | | 80 µm → No | |
| | | | 170 µm → No (see figure 6) | |

As can be seen in table 2, the described new process according to figure 4) shows significantly better strength compared to the process according to figure 2 between RT - 60°C. Sufficiently low values were obtained for Example 1 and the Comparison Example 1 at 90°C, which allows easy de-bonding of the specimens. Significant differences can be also seen regarding the obtained failure modes. Cohesive failures were observed in all cases for Example 1. Adhesive failures are most likely in case of the Comparison example 1. DP6330 alone without any functional layer shows superior bond strength between RT - 60°C (Comparison Example 2.). No significant performance drop was found in this case at 90°C.

A particular advantage of the supported design is the ability to manufacture Die-Cuts. 10 out of 10 Die-Cuts were manufactured successfully. No Die-Cuts were successfully manufactured via the unsupported product design.

### Example 2 and Comparative Example 3:

**Table 3: Used materials, their function and supplier.**

| **Material** | **Function, Description** | **Supplier** |
|---|---|---|
| Marnex AH 441 | Co-Polyester, 12.000 g/mol | Macroocean |
| Marnex AH 645 | Co-Polyester, 15.000 g/mol | Macroocean |
| Paraloid EXL-2650J | CSR Toughener | Dow |
| DP 6330 | PUR based 2K Adhesive | 3M |
| DP 610 | PUR based 2K Adhesive | 3M |
| Optiveil^{™}, fine polyester veil | Support Layer, 8 g/m² | Technical Fibre Products |

HotMelt foils comprising a blend (45:45:10 wt%) of MarnexAH 441:MarnexAH 645:Paraloid EXL-2650J (Example 2) and a blend (50:50 wt%) of Marnex AH 441:Marnex AH 645 (Comparative Example 3) were manufactured the way, that a Optiveil, fine polyester veil was embedded. The thickness of the supported functional layer was ~ 320 µm in both cases.

For the mechanical analysis Overlap Shear strength (OLS) and Tensile strength was tested. The specimens were manufactured according to figure 4. As substrates e-coated Steel was used and the gap size between the assembled substrates was 1.00 mm in all cases (table 4).

**Table 4: Result of Example 2 and Comparison Example 3 using 3M DP 610 and 3M DP 6330.**

| **Property / Method** | **Adhesive** | **Example 2** | **Comparison Example 3** |
|---|---|---|---|
| Overlap Shear Strength (MPa) @ RT | DP 610/ DP 6330 | 11.2 (0.5) / 16.4 (0.2) | 9.5 (2.4) / 7.6 (0.2) |
| Tensile Strength (MPa) @ RT | | 4.3 (0.2) / 2.9 (0.3) | 1.9 (0.2) / 2.3 (0.3) |

As can be seen in table 4, the incorporation of a core-shell rubber (CSR) based toughener results in improved OLS/tensile strength of the assembly tested at room temperature.

### Example 3 and Comparative Example 4

**Table 5: Used materials, their function and supplier.**

| **Material** | **Function, Description** | **Supplier** |
|---|---|---|
| Marnex AH441 | Co-Polyester, 12.000 g/mol | Macroocean |
| Marnex AH645 | Co-Polyester, 15.000 g/mol | Macroocean |
| SA 9860 | Epoxy based 2K Adhesive | 3M |
| Optiveil^{™}, fine polyester veil | Support Layer, 8 g/m² | Technical Fibre Products |
| SW EW-5000 AS | SA Primer | 3M |
| Scotch ^{®} 3434 | Masking Tape | 3M |

A HotMelt foil comprising a blend (50:50 wt%) of Marnex AH441 and Marnex AH645 was extruded on a siliconized PET liner. The thickness of the functional layer can be adjusted as desired between e.g. 10 - 200 µm. For patent Example 3, two 80 µm thick functional layers were used in combination with a support layer (Optiveil^{™}, fine polyester veil, 8 g/m²). The final supported functional layer was assembled by means of heat (105°C) and pressure for 5 minutes according to Example 1.

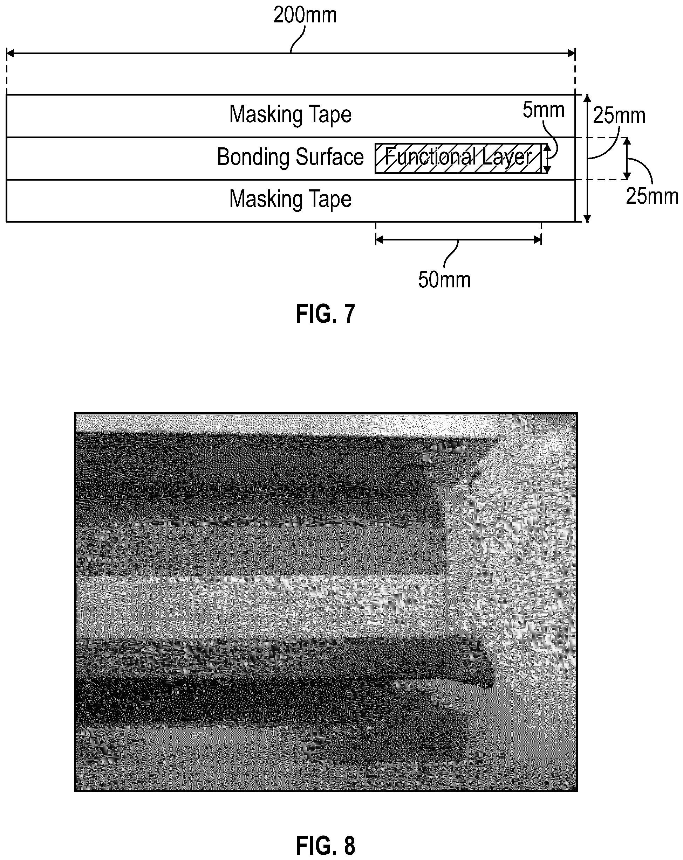

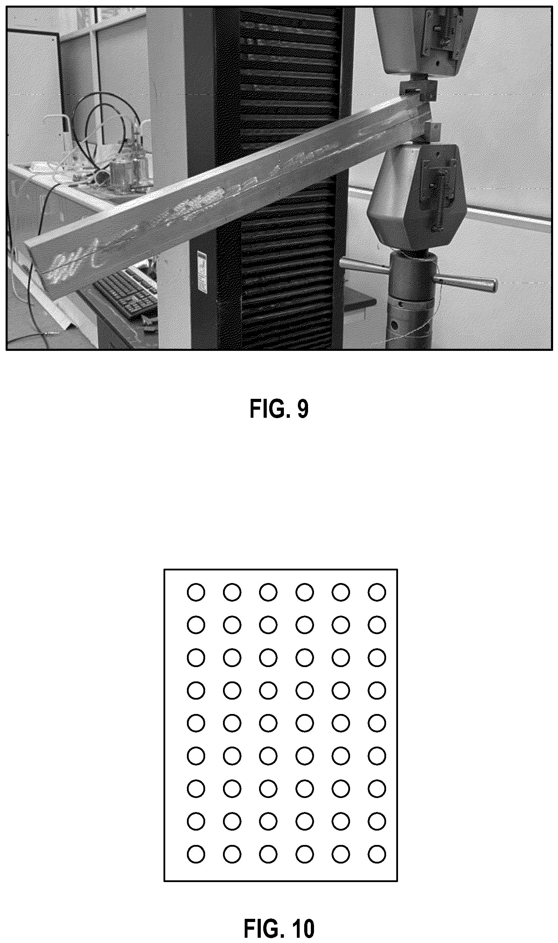

As substrates for cleavage testing aluminium square tubes, 6063 T6, 10SWG, 25 mm width and height, 200mm length were used. The bonding surface were grit blasted to 2Ra and subsequently coated using EW5000AS cured in a preheated oven at 140°C for 1 hour. For patent example 3, the primed tubes were heated to 120°C, and the supported functional layer (5mm x 50 mm) was tacked on to surface (applied 2mm from tube end, see figures 7 and 8.)) then left in oven for 5mins to ensure wet out then cooled to room temperature (acc. to fire 1, new process, path 1). In the next step, a 10mm wide strip was marked out on all tubes using Scotch ^{®} 3434 masking tape. A thermocouple was positioned in the center of the supported functional layer strip. 3M Structural Adhesive 9860 was applied to the tubes and 1mm glass beads were added to adjust the bondline thickness. For assembly, the second primed tube was as well covered with a SA 9860 bead and finally pressed on top of the first tube. For comparison Example 4, the same steps were conducted despite that no supported functional layer was used. All specimens were allowed to cure for 7 days at room temperature. For testing, the samples were clamped in the test machine and heated up to 90°C using a hot air gun (figure 9)). All specimens (n = 3, per group) were allowed to dwell 30 seconds at 90°C before the test was started (test speed: 300 kgf/min).

As can be seen on table 6, the use of a patch of the supported functional layer results in a decrease of the heat induced cleavage force (90°C) of about 44% compared to the comparison example 3 which didn't comprise the supported functional layer.

**Table 6: Results of cleavage test for Example 3 and Comparison Example 4.**

| **Property / Method** | **Adhes ive** | **Example 3** | **Comparison Example 4** |
|---|---|---|---|
| Cleavage Load in Kgf | SA 9860 | 150 (5.7) | 269 (2.4) |

Based on the results of Example 3, the supported functional layer can be used as well in small patches only, allowing an easy first opening process of an assembly. Next to the use of small patches a further variation would be the use of a perforated supported functional layer (figure 10).

## Claims

1. A heat-initiated debondable attachment article, comprising
(i) a first debondable layer having a first major surface and a second major surface and comprising at least one first thermoplastic polymer;
(ii) a second debondable layer having a first major surface and a second major surface and comprising at least one second thermoplastic polymer;
(iii) a porous support layer between the first surface of the first debondable layer and the first surface of the second debondable layer;
(iv) optionally, a first adhesive layer covering the second major surface of the first debondable layer;
(v) optionally, a second adhesive layer covering the second major surface of the second debondable layer;
(vi) optionally, a first liner atop the outer surface of the first adhesive layer or the first debondable layer; and
(vii) optionally, a second liner atop the outer surface of the second adhesive layer or the second debondable layer.

2. The heat-initiated debondable attachment article according to claim 1, wherein the first debondable layer and the second debondable layer are in contact with each other through the porous support layer.

3. The heat-initiated debondable attachment article according to claim 1, wherein the porous support layer comprises at least one material selected from tissue, mesh, non-woven cloth, vlies, woven cloth, scrim, and any combinations thereof, preferably non-woven cloth, mesh, vlies, and any combinations thereof.

4. The heat-initiated debondable attachment article according to any of the preceding claims, wherein porous support layer comprises at least one material selected from natural and synthetic fibers, preferably from synthetic fibers, more preferably from polyethylene fibers.

5. The heat-initiated debondable attachment article according to any one of the preceding claims, wherein the porous support layer exhibits an area weight in the range of from 1 to 30 g/square meter, preferably from 2 to 25 g/square meter, and more preferably from 3 to 20 g/square meter.

6. The heat-initiated debondable attachment article according to any one of the preceding claims, wherein the porous support layer exhibits a thickness in the range of from 20 to 200 micrometers, preferably from 40 to 180 micrometers, and more preferably from 50 to 120 micrometers.

7. The heat-initiated debondable attachment article according to any one of the preceding claims, wherein the at least one thermoplastic polymer exhibits a glass transition temperature in the range of from 20 to 100 °C, preferably from 25 to 80 °C, and more preferably from 35 to 75 °C.

8. The heat-initiated debondable attachment article according to any one of the preceding claims, wherein the at least one thermoplastic polymer is selected from polyesters, poly(meth)acrylates, acrylonitrile butadiene styrenes, polyamides, polybenzimidazoles, polycarbonates, polyether sulfones, polyoxymethylenes, polyether ether ketones, polyetherimides, polyethylenes, polyphenylene oxides, polyphenylene sulfides, polypropylenes, polystyrenes, polyvinyl chlorides, and any combinations thereof, preferably polyesters,.

9. The heat-initiated debondable attachment article according to any one of the preceding claims, wherein the at least one thermoplastic resin exhibits a number average molecular weight in the range of from 5,000 to 50,000 g/mol, preferably from 7,000 to 40,000 g/mol, and more preferably from 8,000 to 30,000 g/mol.

10. The heat-initiated debondable attachment article according to any of the preceding claims, wherein the at least one first debondable layer and/or the at least one second debondable layer comprises at least one toughener, and wherein the at least one toughener is selected from butadiene rubbers, nitrile rubbers, and core-shell rubbers, more preferably from core-shell rubbers.

11. The heat-initiated debondable attachment article according to any one of the preceding claims, wherein the article comprises perforations.

12. A die-cut, comprising the article according to any one of the preceding claims.

13. A part assembly having a first end and a second end, comprising a first part, a second part, and the heat-initiated debondable attachment article according to any one of claims 1 to 12 disposed between the first and the second part.

14. A method for bonding and debonding a part assembly, the method comprising the following steps:
(I) Attaching an article according to any one of claims 1 to 12 onto at least part of the surface of a first part;
(II) Optionally, applying at least one adhesive onto a first major surface of a second part;
(III) Attaching the second part onto the article attached to the first part such that the article connects the first and second part, thereby forming a part assembly;
(IV) Optionally, allowing the at least one adhesive to cure;
(V) Heating the part assembly so as to soften and/or at least partially melt the thermoplastic resin comprised in the first debondable layer and/or second debondable layer;
(VI) Disconnecting the second part from the first part.

15. Use of the heat-initiated debondable attachment article according to any one of claims 1 to 12 or the die-cut according to claim 13 in the manufacture of recyclable articles.
